(19) Europäisches Patentamt / European Patent Office / Office européen des brevets

(11) **EP 3 563 121 B1**

(12) **EUROPÄISCHE PATENTSCHRIFT**

(45) Veröffentlichungstag und Bekanntmachung des Hinweises auf die Patenterteilung:
**23.02.2022 Patentblatt 2022/08**

(21) Anmeldenummer: **17801467.6**

(22) Anmeldetag: **22.11.2017**

(51) Internationale Patentklassifikation (IPC):
**G01F 1/58** (2006.01)   **G01F 1/66** (2022.01)
**G01N 22/00** (2006.01)

(52) Gemeinsame Patentklassifikation (CPC):
**G01F 1/58; G01N 22/00;** G01F 1/662

(86) Internationale Anmeldenummer:
**PCT/EP2017/080087**

(87) Internationale Veröffentlichungsnummer:
**WO 2018/121927 (05.07.2018 Gazette 2018/27)**

(54) **MESSANORDNUNG ZUR ANALYSE VON EIGENSCHAFTEN EINES STRÖMENDEN MEDIUMS MITTELS MIKROWELLEN**

MEASURING ARRANGEMENT FOR ANALYZING PROPERTIES OF A FLOWING MEDIUM BY MICROWAVES

ASSEMBLAGE DE MESURE PERMETTANT D'ANALYSER LES PROPRIÉTÉS D'UN MILIEU FLUIDE PAR DES MICRO-ONDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.12.2016 DE 102016125809**

(43) Veröffentlichungstag der Anmeldung:
**06.11.2019 Patentblatt 2019/45**

(73) Patentinhaber: **Endress+Hauser Flowtec AG 4153 Reinach (CH)**

(72) Erfinder:
• **PFLÜGER, Stefan**
  **81379 München (DE)**
• **ZIEGLER, Steffen**
  **79650 Schopfheim (DE)**
• **VOIGT, Frank**
  **79576 Weil am Rhein (DE)**

(74) Vertreter: **Andres, Angelika Maria
Endress+Hauser Group Services
(Deutschland) AG+Co. KG
Colmarer Straße 6
79576 Weil am Rhein (DE)**

(56) Entgegenhaltungen:
WO-A1-00/43759     WO-A1-2013/181173
DE-A1- 3 412 704     DE-B3-102004 057 087
US-A- 3 999 443     US-A- 4 755 743
US-A1- 2016 131 601

**EP 3 563 121 B1**

**Beschreibung**

Die vorliegende Erfindung betrifft eine Messanordnung zur Analyse von Eigenschaften eines strömenden Mediums mittels Mikrowellen. Mittels Mikrowellen lassen sich insbesondere die physikalischen Größen Permittivität sowie Verlustfaktor eines Mediums in einer Prozessleitung ermitteln. Aus diesen beiden Größen - gemessen entweder bei einer oder über viele unterschiedliche Frequenzen - lassen sich Rückschlüsse auf anwendungsspezifische Parameter ziehen, beispielsweise auf den Anteil von Wasser in einem Gemisch aus Wasser und anderen nicht oder wenig polaren Komponenten.

Die etablierte Transmissions-/Reflexionsmessung ist beschrieben in L.F. Chen, C.K. Ong, C.P. Neo, V.V. Varadan, V. K. Varadan - "Microwave Electronics, Measurement and Materials Characterization", John Wiley & Sons Ltd., 2004. Hierfür wird das Mikrowellensignal an zwei unterschiedlichen Positionen an das Medium in einem Behälter bzw. Rohr angekoppelt, die Streuparameter (Transmission und ggfs. Reflexion) zwischen diesen Ankoppelstrukturen gemessen und aus den gemessenen Streuparametern auf die genannten physikalischen Eigenschaften des Mediums zurückgerechnet.

Herkömmliche Einkoppelstrukturen besitzen jedoch verschiedene Nachteile:
Viele Einkoppelstrukturen, wie z.B. eine gekürzte Dipolantenne ragen in das Messrohr hinein. Dies ist jedoch in Hinblick auf einen Druckverlust sowie bei Medien mit Feststoffanteilen aufgrund der Gefahr einer Blockage des Messrohrs oder möglicher Beschädigung der Einkoppelstruktur unerwünscht.

Koppelstrukturen, die außerhalb des metallischen Messrohres angebracht werden und daher nicht in das Messrohr hineinragen, benötigen ein dielektrisches (nicht leitfähiges) Fenster, durch das das Mikrowellensignal eingekoppelt werden kann. Sowohl in Hinblick auf die Hygieneanforderungen für Anwendungen im Lebensmittelbereich als auch in Hinblick auf die Druckbelastbarkeit ist eine Abdichtung dieses Fensters gegenüber dem metallischen Messrohr jedoch konstruktiv aufwendig. Eine alternative Lösung zum dielektrischen Fenster wird in der DE 10 2004 057 087 B3 gelehrt. Das Antennenpaar ist in Aussparungen der metallischen Rohrinnenwand eingesetzt und durch ein dielektrisches Substrat gegenüber dem Rohrkörper elektrisch isoliert. Derartige Anordnungen weisen häufig jedoch nur einen begrenzten Messbereich auf.

Die US 4,755,743 lehrt eine Messanordnung, bei der eine streifenförmige dielektrische Auskleidungsschicht einen dielektrischen Wellenleiter bildet, über den Mikrowellen zumindest anteilig von einer ersten Mikrowellenantenne zur zweiten Mikrowellenantenne gelangen können. Reflektionsbolzen lassen sich am Messrohr und dem Wellenleiter einsetzen, um den Wellenpfad einzugrenzen und somit den Messbereich zu variieren. Der für die Messung zur Verfügung stehende Frequenzbereich wird jedoch im Wesentlichen durch die geometrischen Maße des streifenförmigen Wellenleiters begrenzt.

Soll gleichzeitig zur Messung der Materialeigenschaften durch Mikrowellensensorik auch eine Messung der Durchflussgeschwindigkeit durch das magnetisch-induktive Messprinzip erfolgen, so ist das die üblichen Koppelstrukturen umgebende, medienberührende Stahlrohr nicht mit der notwendigen Isolation des Mediums des magnetisch-induktive Messprinzips gegenüber der leitfähigen Rohrwand kompatibel. Eine Kombination beider Messprinzipien in einer Messstelle bzw. in einem Gerät verbietet sich daher.

Es ist daher die Aufgabe der Erfindung eine Messanordnung bereitzustellen, welche die obigen Nachteile überwindet.

Die Aufgabe wird erfindungsgemäß gelöst durch die Messanordnung gemäß dem unabhängigen Patentanspruch 1.

Die erfindungsgemäße Messanordnung umfasst:

ein beidseitig offenes, metallisches Messrohr zum Führen eines Mediums, wobei das Messrohr eine äußere Mantelfläche, eine innere Mantelfläche und mindestens zwei Durchbrüche aufweist, wobei sich die beiden Durchbrüche von der äußeren Mantelfläche zur inneren Mantelfläche erstrecken;

eine dielektrische Auskleidungsschicht, welche an der inneren Mantelfläche des Messrohrs anliegt;

eine erste Mikrowellenantenne, welche im Bereich des ersten Durchbruchs angeordnet und durch den ersten Durchbruch kontaktiert ist;

eine zweite Mikrowellenantenne, welche im Bereich des zweiten Durchbruchs angeordnet und durch den zweiten Durchbruch kontaktiert ist;

wobei die dielektrische Auskleidungsschicht einen dielektrischen Wellenleiter bildet, über den Mikrowellen zumindest anteilig von der ersten Mikrowellenantenne zur zweiten Mikrowellenantenne gelangen können,

und ist dadurch gekennzeichnet, dass die Messanordnung weiterhin eine erste leitfähige Ringstruktur und eine zweite leitfähige Ringstruktur aufweist, die jeweils an einer Stirnseite des metallischen Messrohrs angeordnet sind und die dielektrische Auskleidungsschicht stirnseitig begrenzen.

Diese Ringstrukturen können beispielsweise Bestandteil des Messrohrs selbst sein, oder stirnseitig am Messrohr montiert sein, beispielsweise beim Einbau in eine Rohrleitung, in Gestalt angrenzender Rohre oder in Form von Ringscheiben passenden Innendurchmessers.

Die Einkopplung der elektromagnetischen Leistung in die die dielektrische Auskleidungsschicht, die auch als Liner bezeichnet wird, kann analog zur Einkopplung in einen klassischen Hohlleiter erfolgen. Diese Möglichkeiten schließen insbesondere die Kopplung durch eine Sonde ein, die entweder leitfähig mit dem Medium verbunden ist oder isoliert vom Medium innerhalb des Liners endet. Die Durchführung durch das metallische Außenrohr kann zweckmäßigerweise in Koaxialleitungstechnik erfolgen. Sofern die Sonde leitfähig mit dem Medium verbunden ist, besteht die Möglichkeit, diese zusätzlich parallel als Messelektrode für die Durchflussmessung nach dem magnetisch-induktiven Prinzip zu verwenden. Die unterschiedlichen Messsignale können durch ihren großen Frequenzunterschied zwischen Mikrowellensignalen mit Frequenzen oberhalb von 1 GHz und den Signalen zur Durchflussmessung mit Frequenzen von nicht mehr als 10 MHz) getrennt werden. Hierfür kann ein sog. Bias-Tee, eine Kombination aus Hoch- und Tiefpass, zum Einsatz kommen.

In einer Weiterbildung der Erfindung ist die erste Mikrowellenantenne von der Auskleidungsschicht bedeckt und/oder die zweite Mikrowellenantenne ist von der Auskleidungsschicht bedeckt.

In einer Weiterbildung der Erfindung ist das Messrohr im Wesentlichen zylindrisch ist, wobei die Auskleidungsschicht eine Stärke b aufweist, die nicht mehr als ein Zehntel insbesondere nicht mehr als ein Zwanzigstel des Innendurchmessers des Messrohrs beträgt.

In einer Weiterbildung der Erfindung weist die Auskleidungsschicht eine mittlere Stärke d auf, die nicht weniger als 2 mm, insbesondere nicht weniger als 4 mm und bevorzugt nicht weniger als 5 mm beträgt.

In einer Weiterbildung der Erfindung weist das Messrohr eine Messrohrachse auf, wobei eine gerade Verbindungslinie zwischen der ersten Mikrowellenantenne und der zweiten Mikrowellenantenne existiert, welche die Messrohrachse in einem rechten Winkel schneidet.

In einer Weiterbildung der Erfindung umfasst die erste Mikrowellenantenne eine Planarantenne und/oder die zweite Mikrowellenantenne umfasst eine Planarantenne.

Die Planarantenne kann insbesondere über einen Koaxialanschluss differentiell gespeist werden.

In einer Weiterbildung der Erfindung ist die Planarantenne bzw. sind die Planarantennen spiralförmig ausgebildet.

In einer Weiterbildung der Erfindung umfassen die Planarantennen eine drucktragende Keramikplatte.

In einer Weiterbildung der Erfindung, umfasst die Messanordnung weiterhin eine Magnetbaugruppe zum Erzeugen eines Magnetfelds, welches das Messrohr im Wesentlichen senkrecht zur Messrohrachse durchdringt.

In einer Weiterbildung der Erfindung umfasst die Messanordnung eine erste Elektrode und eine zweite Elektrode welche sich durch die Auskleidungsschicht in das Messrohr erstrecken, wobei die Elektroden dazu eingerichtet sind, ein in dem Messrohr geführtes Medium elektrisch zu kontaktieren, wobei insbesondere eine gerade Verbindungslinie zwischen den beiden Elektroden im Wesentlichen senkrecht zum Magnetfeld und senkrecht zur Messrohrachse verläuft.

In einer Weiterbildung der Erfindung weist die erste Mikrowellenantenne die erste Elektrode auf, und die zweite Mikrowellenantenne weist die zweite Elektrode auf.

In einer Weiterbildung der Erfindung umfasst die Messanordnung weiterhin eine Betriebs-und Auswerteelektronik, welche einen Hochfrequenzgenerator zum Speisen mindestens einer der Mikrowellenantennen mit mindestens einem Hochfrequenzsignal aufweist, und welche dazu eingerichtet ist anhand der von der anderen Antenne empfangenen Mikrowellensignale mindestens eine Eigenschaft ausgewählt aus Permittivität und Verlustfaktor eines in dem Messrohr geführten Mediums zu bestimmen.

In einer Weiterbildung der Erfindung ist der Hochfrequenzgenerator dazu eingerichtet, die mindestens eine der Mikrowellenantennen mit einer Folge von Hochfrequenzsignalen unterschiedlicher Frequenzen zu speisen.

In einer Weiterbildung der Erfindung ist die Betriebs- und Auswerteelektronik dazu eingerichtet, die mindestens eine Eigenschaft des in dem Messrohr geführten Mediums anhand der Dämpfung der Hochfrequenzsignale und/oder der Phasenlage zwischen den eingestrahlten und empfangenen Hochfrequenzsignalen zu bestimmen.

In einer Weiterbildung der Erfindung umfasst die die Magnetbaugruppe mindestens eine Feldspule umfasst, wobei die Betriebs- und Auswerteelektronik dazu eingerichtet ist, die mindestens eine Feldspulen zu speisen, ein Potential zwischen der ersten Elektrode und der zweiten Elektrode zu erfassen, welches von der Durchflussgeschwindigkeit des eines Mediums durch das Messrohr abhängt, und anhand des Potentials einen Druchflussmesswert zu ermitteln.

Die Erfindung wird nun anhand des in den Zeichnungen dargestellten Ausführungsbeispiels näher erläutert. Es zeigt:

Fig. 1a:  eine räumliche Darstellung eines Ausführungsbeispiels einer erfindungsgemäßen Messanordnung;

Fig. 1b:  eine Seitenansicht der Messanordnung aus Fig. 1a;

Fig. 1c:  einen Querschnitt durch die Messanordnung aus Fig. 1b in der Ebene C-C;

Fig. 1d:  einen Querschnitt durch die Messanordnung aus Fig. 1b in der Ebene D-D;

Fig. 1e: eine Detailansicht der Messanordnung aus Fig. 1d an der mit E gekennzeichneten Position;

Fig. 2a: einen Längsschnitt durch einen Rohrleitungsabschnitt, in dem die Messanordnung aus Fign. 1a bis 1e eingebaut ist;

Fig. 2b: einen Längsschnitt durch ein weiteres Ausführungsbeispiel einer Messanordnung mit stirnseitigen Metallscheiben;

Fig. 2c: einen Detaillängsschnitt durch einen Messrohrabschnitt eines weiteren Ausführungsbeispiels einer Messanordnung;

Fig. 2d: eine räumliche Darstellung eines zweiten Ausführungsbeispiels einer erfindungsgemäßen Messanordnung;

Fig. 3a: eine Frontansicht einer Planarantenne eines Ausführungsbeispiels einer erfindungsgemäßen Messanordnung;

Fig. 3b: einen Detaillängsschnitt durch eine eine Hohlleiterantenne mit MID-Elektrode einem Messrohr einer erfindungsgemäßen Messanordnung;

Fig. 3c: eine Feldsimulation für die Hohlleiterantenne mit MID-Elektrode aus Fig. 3b;

Fig. 4: einen schematischen Halbschnitt durch ein Messrohr einer erfindungsgemäßen Messanordnung;

Fig. 5a: exemplarische Simulationsergebnisse zur Feldverteilung Wellenausbreitung in einer erfindungsgemäßen Messanordnung; und

Fig. 5b: ein Diagramm zur Transmission von Mikrowellen in einer erfindungsgemäßen Messanordnung und in einer Messanordnung nach dem Stand der Technik.

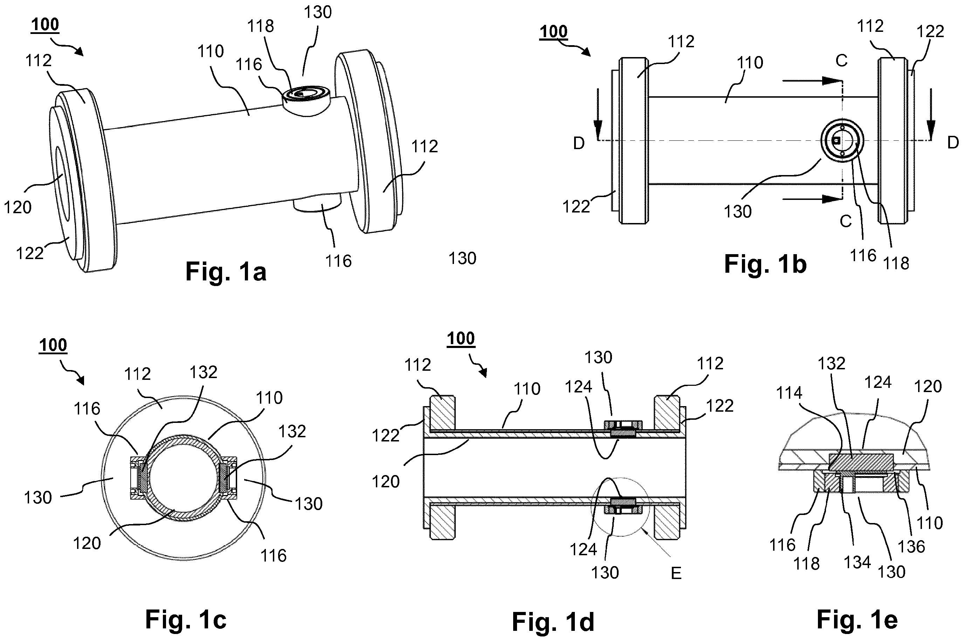

Die in Fign. 1a bis 1e dargestellte Messanordnung umfasst ein Metallisches Messrohr 110 mit endseitigen, metallischen Anschlussflanschen 112, das mit einem Liner 120 ausgekleidet ist, der einen Kunststoff umfasst, beispielsweise ein Polyurethan oder ein Fluoropolymer wie PFA oder PTFE aufweist. Der Liner 120 kann stirnseitig Dichtflächen 122 aufweisen, die aus dem Messrohr 110 herausgeführt sind und an den Stirnseiten der Flansche 112 anliegen.

Um Mikrowellen ein- und auskoppeln zu können, umfasst die Messanordnung 100 zwei an einer Mantelfläche des Messrohrs 110 einander gegenüberliegend angeordnete Antennenbaugruppen 130, deren Einzelheiten insbesondere in Fig. 1e dargestellt sind. Im Bereich der Antennenbaugruppen 130 weist das Messohr 110 jeweils einen Durchbruch 114 auf, welcher an der äußeren Mantelfläche des Messrohrs 100 mit einer Gewindehülse 116 umgeben ist, in welche ein Spannring 118 eingeschraubt ist, um eine Keramikplatte 132, welche einen Trägerkörper für eine Planarantenne bildet, sowie eine an der Keramikplatte 132 außenseitig angeordnete Anschlussplatine 134 gegen den Liner 120 einzuspannen. Zum Ausgleich von Temperaturschwankungen und Fertigungstoleranzen kann zwischen dem Spannring 118 und der Keramikplatte 132 bzw. der Anschlussplatine 134 zusätzlich eine elastischer Ring 136 angeordnet sein. Der Liner 120 weist an der Position der Keramikplatte 132 von seiner Außenseite her eine Vertiefung 124 auf, die vollständig von der Keramikplatte 132 ausgefüllt wird. Im Ergebnis ist ein Trägerkörper einer Planarantenne in den Liner 120 eingebracht, ohne die Integrität des Liners 120 zum Inneren des Messrohrs hin zu beeinträchtigen. Zudem bleibt die Druckfestigkeit der Messanordnung durch geeignete Dimensionierung der Keramikplatte 132 und des Spannrings 118 erhalten.

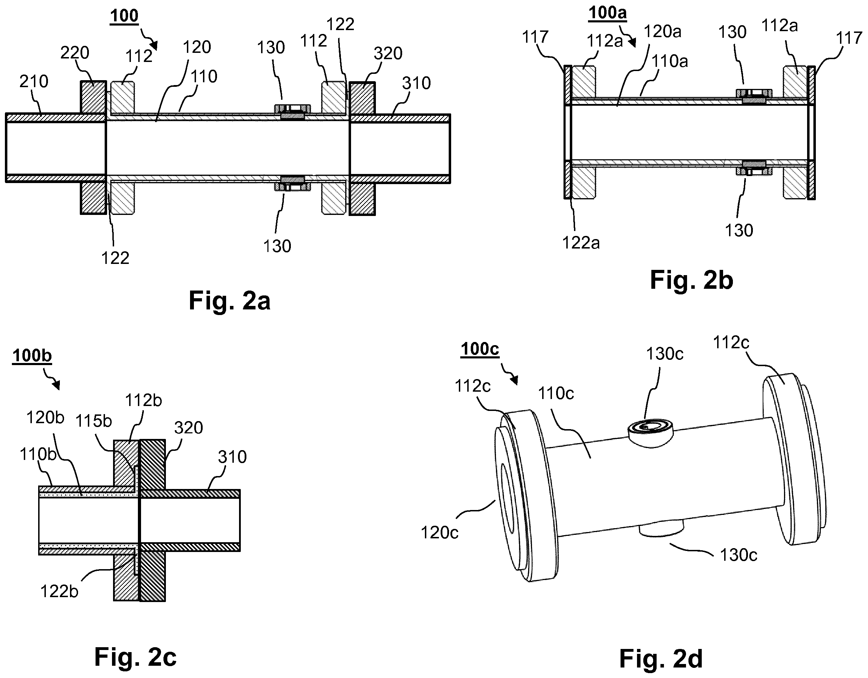

Für die erfindungsgemäße Messanordnung ist es vorteilhaft, wenn der Liner 120 in Längsrichtung des Messrohrs 110 durch elektrisch leitendes Material, insbesondere Metall begrenzt ist. Zur Realisierung dieser Bedingung sind zwei Dazu sind zwei Alternativen in Fign. 2a bis 2c dargestellt.

Fig. 2a zeigt eine erfindungsgemäße Messanordnung 100, deren Messrohr 110 in einen Rohrleitungsabschnitt zwischen einem ersten metallischen Rohr 210 und einem zweiten metallischen Rohr 210 eingebaut wobei jeweils ein Flansch 320 der Rohre 310 mit einem Flansch 112 des Messrohrs 110 verbunden ist. Die beiden metallischen Rohre 310 weisen einen Innendurchmesser auf, der dem Innendurchmesser des Liners 120 entspricht. Damit ist eine Begrenzung des Liners 120 durch ein metallisches Material in Längsrichtung der Messanordnung 100 erreicht.

Fig. 2b zeigt eine erfindungsgemäße Messanordnung 100a, die eine Begrenzung des Liners 120a durch ein metallisches Material in Längsrichtung der Messanordnung 100a unabhängig von einer Einbausituation in einen Rohrleitungsabschnitt erzielt. Hierzu weist die Messanordnung 100a metallische Ringscheiben 117 auf, deren Innendurchmesser mit dem des Liners 120a übereinstimmt, und die an den Stirnflächen der Flansche 112a befestigt sind, beispielsweise durch Fügen mittels Löten oder Schweißen. Im Ergebnis bilden die Ringscheiben 117 zusammen mit dem Messrohr 110a einen leitfähigen Abschluss des Liners 120a in radialer Richtung nach außen und beide axiale Richtungen.

Die Fig. 2c dargestellte erfindungsgemäße Messanordnung 100b weist eine Modifikation gegenüber der Messanordnung aus Fig. 1a auf. Der Flansch 112b weist an seiner Stirnfläche eine ringörmig umlaufende axiale Vertiefung 115b auf, in welcher die stirnseitige Dichtfläche 122b des Liners 120 aufgenommen ist. Insofern, als der Flansch 112b in einem radialen Abschnitt, der an die axiale Vertiefung 115b anschließt, mit einem Flansch 320 eines metallischen Rohrs 310 verbunden ist, verbleibt zwischen den kein Spalt, welcher die Mikrowellensignale beeinträchtigen könnte. Ansonsten weist das an die Messanordnung angeschlossene metallische Rohr 310 weist einen Innendurchmesser auf, der dem Innendurchmesser des Liners 120b entspricht. Damit ist die Begrenzung des Liners 120b durch ein metallisches Material in Längsrichtung der Messanordnung 100b erreicht. Fig. 2c zeigt nur einen axialen Endabschnitt der Messanordnung. Selbstverständlich ist der andere Endabschnitt entsprechend gestaltet. Im Sinne der Vereinfachung wurde auf die Darstellung der Antennenbaugruppen in dieser Zeichnung verzichtet, wenngleich die erfindungsgemäßen Messanordnung 100b selbstverständlich zwei Antennenbaugruppen aufweist.

Fig. 2d zeigt eine weitere Ausgestaltung einer erfindungsgemäßen Messanordnung 100c, die sich von dem Ausführungsbeispiel aus Fign. 1a bis 1e durch die axiale Position der Antennenbaugruppen 130c unterscheidet. Während die in Fign. 1a bis 1e dargestellte asymmetrische Positionierung der Antennenbaugruppen in axialer Richtung Platz für weitere Komponenten am Messrohr 110 frei lässt, sind die Antennenbaugruppen 130c in beim Ausführungsbeispiel aus Fig. 2d in axialer Richtung symmetrisch zwischen den beiden Flanschen des 112c der Messanordnung positioniert. Ansonsten entspricht diese Ausgestaltung der Erfindungsgemäßen Messanordnung 100c der Ausgestaltung aus Fign. 1a bis 1e.

Die Einkopplung der elektromagnetischen Leistung in den Liner kann analog zur Einkopplung in einen klassischen Hohlleiter erfolgen. Diese Möglichkeiten schließen insbesondere die Kopplung durch eine Sonde ein, die entweder leitfähig mit dem Medium verbunden ist oder isoliert vom Medium innerhalb des Liners endet. Die Durchführung durch das metallische Außenrohr kann zweckmäßigerweise in Koaxialleitungstechnik erfolgen. Sofern die Sonde leitfähig mit dem Medium verbunden ist, besteht die Möglichkeit, diese zusätzlich parallel als Messelektrode für die Durchflussmessung nach dem magnetisch-induktiven Prinzip zu verwenden. Die unterschiedlichen Messsignale können durch ihren großen Frequenzunterschied (Mikrowellensignale meist > 1 GHz, Signal zur Durchflussmessung meist < 10 MHz) getrennt werden. Hierfür kann ein sog. Bias-Tee (Kombination aus Hoch- und Tiefpass) zum Einsatz kommen.

Des Weiteren ist zur Ankopplung der elektromagnetischen Leistung auch die Verwendung einer differentiell gespeisten Antenne, insbesondere eine differentiell gespeiste Spiralantenne, denkbar.

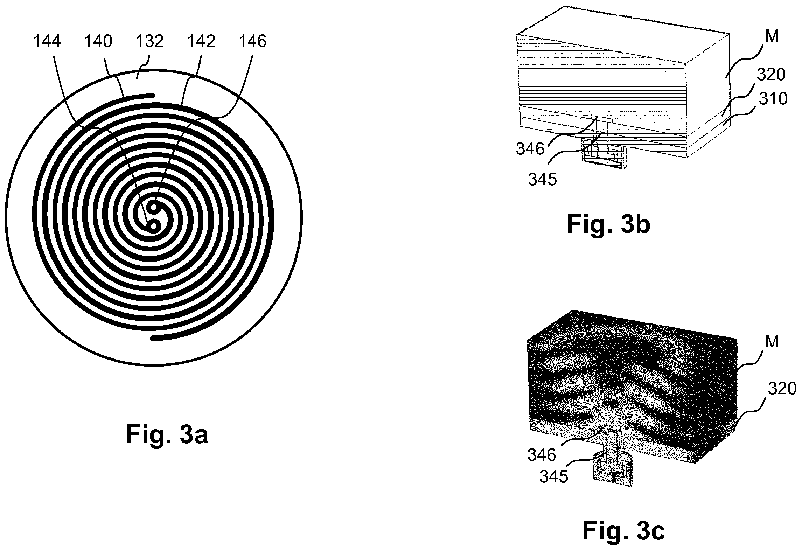

Fig. 3a zeigt eine Planarantenne mit zwei spiralförmigen metallische Leiterbahnen 140, 142, die auf der Stirnseite der Keramikplatte 132 präpariert sind. Die Planarantennen 132 sind im Messbetrieb mit den Leiterbahnen 140, 142 voran in das Messrohr eingesetzt, so dass die Leiterbahnen 140, 142 in der Vertiefung 124 des Liners 120 positioniert sind. Die Leiterbahnen, 142, 144 werden im Zentrum der Keramikplatte 132 über elektrischen Durchführungen 144, 146 von der Rückseite der Keramikplatte her 132 kontaktiert. Sie sind über die Durchführungen an die beispielsweise in Fig 1e dargestellte Anschlussplatine 134 angeschlossen, um die Planarantenne mit einem Mikrowellensignal zu speisen bzw. ein von der Planarantenne empfangenes Mikrowellensignal abzuleiten.

Fig. 3b zeigt eine Hohlleiterantenne 345, die durch ein metallische Messrohr 310 und einen Liner 320 zum Medium M geführt ist und zum Medium M hin mit einer metallischen MID-Elektrode 146 terminiert ist, welche mit dem Medium im galvanischen Kontakt steht, um bei der Realisierung der Messanordnung als magnetisch induktivem Durchflussmessgerät durchflussabhängige Potentiale zu erfassen.

Die in Fig. 3c dargestellten Ergebnisse einer Simulation zeigen die Ausbreitung der Mikrowellensignale im Liner 320 und im Medium M.

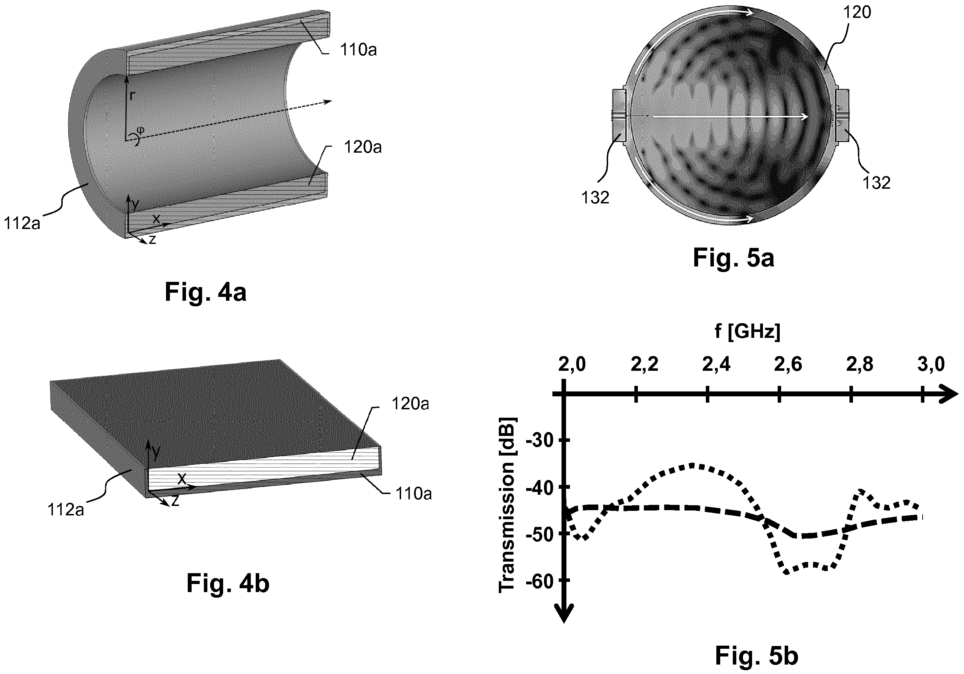

Das Wirkprinzip der erfindungsgemäßen Messanordnung 100 wird nun anhand der Fign. 4a und 4b erläutert. Der (beispielsweise in einem magnetisch-induktiven Durchflussmesser vorhandene) elektrisch isolierende Liner 120a kann als funktionaler Teil einer Einkoppelstruktur für ein Mikrowellensignal genutzt werden. Die Konstruktion ist so gestaltet, dass der Liner 120a zu allen Seiten - mit Ausnahme der medienberührenden Innenflächen - an eine metallische Wand angrenzt, nämlich das den Liner 120a umgebende Messrohr 110a und die stirnseitigen Ringscheiben 112a. In dem Schnittbild nach Fig. 4a ist dies schematisch dargestellt. Durch "Abrollen" entlang des Rohrumfangs lässt sich zeigen, dass der Liner 120a in guter Näherung einem Hohlleiter entspricht, wie in Fig. 4b skizziert ist. Im Vergleich zu einem idealen Rechteckhohlleiter, der an allen Seiten von einer ideal leitfähigen elektrischen Wand begrenzt ist, ist die Leitfähigkeit der oberen medienberührenden Hohlleiterwand endlich und von dem Medium im Messrohr abhängig.

Im Fall sehr gut leitfähiger Medien kann die Wellenausbreitung in dieser Struktur durch die Wellenausbreitung in einem idealen, mit dem dielektrischen Material des Liners gefüllten, Rechteckhohlleiter approximiert werden. Aus den Maxwell-Gleichungen lassen sich dann mehrere Lösungen bestimmen ($TE_{mn}$ und $TM_{mn}$-Moden), die diese Randbedingungen erfüllen. Diese Feldmoden besitzen eine Cutoff-Frequenz $f_{c,mn}$, die gegeben ist als

$$f_{c,mn} = \frac{1}{2\pi\sqrt{\varepsilon\mu}}\sqrt{\left(\frac{m\pi}{a}\right)^2 + \left(\frac{n\pi}{b}\right)^2} \qquad (1)$$

oberhalb derer sie ausbreitungsfähig sind. Dabei bezeichnet "a" die Länge des Wellenleiters in Richtung der in Abbildung 2 bezeichneten x-Koordinatenachse, "b" die Länge entlang der y-Koordinatenachse. Die ganzzahligen Indizes m und n geben die Ordnung des jeweiligen Modes an. Der Ausbreitungskoeffizient des jeweiligen Mode lässt sich ebenfalls aus den Maxwell-Gleichungen ableiten zu

$$\gamma_{mn}(f) = j\frac{2\pi f\sqrt{\epsilon_r\mu_r}}{c_0}\sqrt{1-\left(\frac{f_c}{f}\right)^2} \quad (2)$$

Bei Medien mit geringerer Leitfähigkeit kann eine genaue Berechnung der ausbreitungsfähigen Moden sowie der damit verknüpften Ausbreitungskoeffizienten durch Anpassung der Randbedingung der medienberührenden Seite des Hohlleiters und Simulation der Struktur durch Software zur Vollwellensimulation erfolgen. Durch nicht ideal leitfähige Randbedingungen tritt ein zusätzlicher Verlustanteil bei der Wellenausbreitung auf.

Weiterhin besteht durch die ringförmige Anordnung des Wellenleiters entlang des Rohrumfangs die zusätzliche Randbedingung, dass das Feldbild in der vorderen und hinteren Stirnfläche des Modells nach Abbildung 2 in der x-y-Ebene (z=min und z=max) identisch sein müssen. Diese zusätzliche Randbedingung kann nur erfüllt werden, wenn die Länge "l" des Wellenleiters einem ganzzahligen Vielfachen der Wellenlänge im Wellenleiter entspricht. Diese Bedingung lautet im verlustfreien Fall dann:

$$\lambda = j\frac{2\pi}{\gamma_{mn}(f)} \overset{!}{=} p \cdot l \quad (3)$$

Diese Bedingung kann nur für bestimmte Frequenzen f erfüllt werden, die zugehörigen Resonanzfrequenzen lassen sich hierdurch berechnen. Im verlustbehafteten Fall erfolgt diese Berechnung bevorzugt mit numerischen Hilfsmitteln. Durch die auftretenden Verluste wird die im ideal verlustfreien Fall auftretende Resonanzfrequenz zu einer Resonanzkurve verbreitert, eine Wellenausbreitung ist innerhalb deren Resonanzbreite möglich. Mehrere dieser Resonanzen können ineinander übergehen und so innerhalb eines weiten Frequenzbereiches Wellenausbreitung ermöglichen.

Jede dieser sich vorwiegend im Liner ausbreitenden Moden führt zu einer zugehörigen Stromdichteverteilung in den leitfähigen Grenzflächen. Eine derartige Stromdichteverteilung in der medienberührenden Grenzschicht des Liners bedingt jedoch auch die Ausbreitung eines elektromagnetischen Feldes in das nicht ideal leitfähige Medium hinein. Die Grenzschicht erfüllt also die Funktion einer Antenne. Durch die schnellere Ausbreitungsgeschwindigkeit im Liner im Vergleich zu typischen wässrign Medien kommt es dabei zu einer gerichteten Abstrahlung elektromagnetischer Leistung durch das Medium, wie in Fig. 5a dargestellt ist. Die Graustufen entsprechen hier der elektrischen Feldstärke.

Durch die Überlagerung eines Ausbreitungspfades im Liner mit einem Ausbreitungspfad durch das Medium werden insbesondere für Medien mit geringer elektrischer Leitfähigkeit, aussagekräftigere Transmissionskurven erzielt, wie anhand von Fig. 5b verdeutlicht. Die punktierte Kurve zeigt die Transmissionskurve für Mikrowellen in einer erfindungsgemäßen Messanordnung, die mit einem Medium mit einer Leitfähigkeit von 1,5 S/m gefüllt ist. Die gestrichelte Kurve zeigt die Transmissionskurve für Mikrowellen in einer Messanordnung ohne Liner, die mit einem Medium mit dem gleichen Medium gefüllt ist. Die mit der erfindungsgemäßen Messanordnung gewonnene Transmissionskurve ist deutlich konturenreicher und ermöglicht damit eine zuverlässigere Bestimmung von Medieneigenschaften.

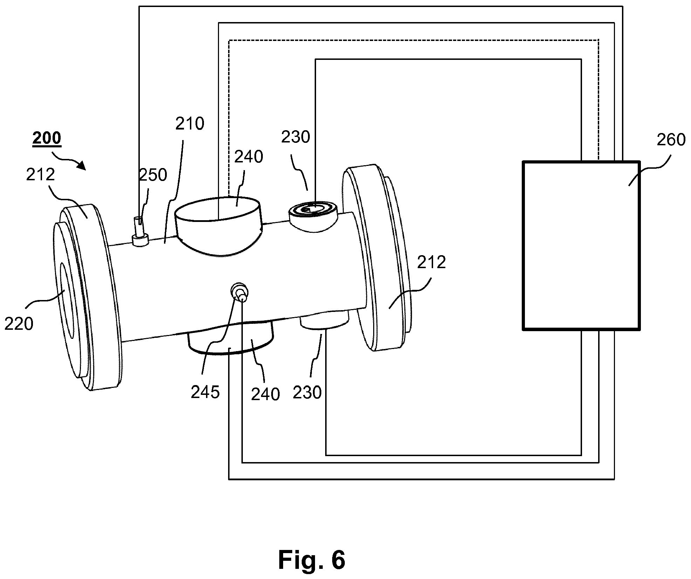

Fig. 6 zeigt schließlich ein weiteres Ausführungsbeispiel einer erfindungsgemäßen Messanordnung 200, welche im Wesentlichen die Messanordnung aus Fign. 1a bis 1e weiterbildet. Zusätzlich zu zwei Antennenbaugruppen 230 für die Mikrowellensignale sind in gleicher Orientierung zwei Feldspulenbaugruppen 240 zur magnetisch-Induktiven Durchflussmessung (MID) an einem Messrohr 210 angeordnet. In der axialen Position der Feldspulenbaugruppen 240 sind senkrecht zur Richtung eines zwischen Feldspulenbaugruppen 240 wirkenden Magnetfelds und senkrecht zur axialen Richtung des Messrohrs zwei einander gegenüberliegende Elektroden 245 angeordnet die sich durch das Messrohr 210 und eine Liner 220 ins Innere des Messrohrs erstrecken, um ein durchflussabhängiges Potential eines strömenden Mediums zu erfassen. (In der Zeichnung ist nur eine Elektrode dargestellt.) Zusätzlich umfasst die Messanordnung einen Temperatursenor 250 zum Erfassen einer Temperatur des Mediums. Die Messanordnung 200 umfasst weiterhin eine Betriebs- und Auswertungseinheit 260, an welche die Antennenbaugruppen 230, die Feldspulenbaugruppen 240, die Elektroden 245 und der Temperatursensor 250 angeschlossen sind. Die Betriebs- und Auswertungseinheit kann verschiedene Untereinheiten aufweisen, welche unterschiedlichen Messaufgaben der Messanordnung 200 separat bearbeiten.

Anstelle der separaten Antennenbaugruppen 230 können in einer Modifikation auch Hohlleiterantennen mit integrierter MID-Elektrode an der Position der Elektroden 245 verwendet werden.

**Patentansprüche**

1. Messanordnung (100), umfassend:

    ein beidseitig offenes, metallisches Messrohr (110) zum Führen eines Mediums, wobei das Messrohr (110) eine äußere Mantelfläche, eine innere Mantelfläche und mindestens zwei Durchbrüche aufweist, wobei sich die beiden Durchbrüche von der äußeren Mantelfläche zur inneren Mantelfläche erstrecken; eine dielektrische Auskleidungsschicht (120), welche an der inneren Mantelfläche des Messrohrs (110) anliegt;

eine erste Mikrowellenantenne (130), welche in dem Messrohr (110) angeordnet und durch den ersten Durchbruch kontaktiert ist;

eine zweite Mikrowellenantenne (130), welche in dem Messrohr angeordnet und durch den zweiten Durchbruch kontaktiert ist;

wobei die dielektrische Auskleidungsschicht (120) einen dielektrischen Wellenleiter bildet, über den Mikrowellen zumindest anteilig von der ersten Mikrowellenantenne (130) zur zweiten Mikrowellenantenne (130) gelangen können, **dadurch gekennzeichnet, dass**

die Messanordnung (100) weiterhin eine erste leitfähige Ringstruktur und eine zweite leitfähige Ringstruktur aufweist, die jeweils an einer Stirnseite des metallischen Messrohrs angeordnet sind und die dielektrische Auskleidungsschicht stirnseitig begrenzen.

2. Messanordnung nach Anspruch 1,

wobei die erste Mikrowellenantenne von der Auskleidungsschicht bedeckt ist und/ oder;
wobei die zweite Mikrowellenantenne von der Auskleidungsschicht bedeckt ist.

3. Messanordnung nach Anspruch 1, oder 2,

wobei das Messrohr im Wesentlichen zylindrisch ist;
wobei die Auskleidungsschicht eine Stärke b aufweist, die nicht mehr als 10 mm, insbesondere nicht mehr als 8 mm und bevorzugt nicht mehr als 7 mm beträgt,
und/oder ein Fünftel insbesondere nicht mehr als ein Sechstel des Innendurchmessers des Messrohrs beträgt.

4. Messanordnung nach einem der vorhergehenden Ansprüche,
wobei die Auskleidungsschicht eine Stärke d aufweist, die nicht weniger als 2 mm, insbesondere nicht weniger als 4 mm und bevorzugt nicht weniger als 5 mm beträgt.

5. Messanordnung nach einem der vorhergehenden Ansprüche,
wobei das Messrohr eine Messrohrachse aufweist, wobei eine gerade Verbindungslinie zwischen der ersten Mikrowellenantenne und der zweiten Mikrowellenantenne existiert, welche die Messrohrachse in einem rechten Winkel schneidet.

6. Messanordnung nach einem der vorhergehenden Ansprüche,
wobei mindestens eine der Mikrowellenantennen eine Planarantenne umfasst, wobei insbesondere beide Mikrowellenantennen eine Planarantenne umfassen.

7. Messanordnung nach Anspruch 6,
wobei mindestens eine der Planarantennen spiralförmig ausgebildet ist, wobei insbesondere beide Planarantennen spiralförmig ausgebildet sind.

8. Messanordnung nach Anspruch 6 oder 7,
wobei mindestens eine der Planarantennen eine drucktragende Keramikplatte als Trägerkörper aufweist, wobei insbesondere beide Planarantennen eine drucktragende Keramikplatte als Trägerkörper aufweisen.

9. Messanordnung nach einem der vorhergehenden Ansprüche,
weiterhin umfassend eine Magnetbaugruppe zum Erzeugen eines Magnetfelds, welches das Messrohr im Wesentlichen senkrecht zur Messrohrachse durchdringt.

10. Messanordnung nach Anspruch 9,
weiterhin umfassend eine erste Elektrode und eine zweite Elektrode welche sich durch die Auskleidungsschicht in das Messrohr erstrecken, wobei die Elektroden dazu eingerichtet sind, ein in dem Messrohr geführtes Medium elektrisch zu kontaktieren, wobei insbesondere eine gerade Verbindungslinie zwischen den beiden Elektroden im Wesentlichen senkrecht zum Magnetfeld und senkrecht zur Messrohrachse verläuft.

11. Messanordnung nach Anspruch 9,
wobei die erste Mikrowellenantenne die erste Elektrode aufweist, und die zweite Mikrowellenantenne die zweite Elektrode aufweist.

12. Messanordnung nach einem der vorhergehenden Ansprüche,
weiterhin umfassend:
eine Betriebs- und Auswertungselektronik welche einen Hochfrequenzgenerator zum Speisen mindestens einer der Mikrowellenantennen mit mindestens einem Hochfrequenzsignal aufweist, und welche dazu eingerichtet ist anhand der von der anderen Antenne empfangenen Mikrowellensignale mindestens eine Eigenschaft ausgewählt aus Permittivität und Verlustfaktor eines in dem Messrohr geführten Mediums zu bestimmen.

13. Messanordnung nach Anspruch 12,
wobei der Hochfrequenzgenerator dazu eingerichtet ist, die mindestens eine der Mikrowellenantennen mit einer Folge von Hochfrequenzsignalen unterschiedlicher Frequenzen zu speisen.

14. Messanordnung nach Anspruch 12 oder 13,

wobei die Betriebs- und Auswerteelektronik dazu eingerichtet ist, die mindestens eine Eigenschaft des in dem Messrohr geführten Mediums anhand der Dämpfung der Hochfrequenzsignale und/oder der Phasenlage zwischen den eingestrahlten und empfangenen Hochfrequenzsignalen zu bestimmen.

15. Messanordnung einem der Ansprüche 10 bis 14,

wobei die Magnetbaugruppe mindestens eine Feldspule umfasst,
wobei die Betriebs- und Auswerteelektronik dazu eingerichtet ist,
die mindestens eine Feldspulen zu speisen,
ein Potential zwischen der ersten Elektrode und der zweiten Elektrode zu erfassen, welches von der Durchflussgeschwindigkeit des eines Mediums durch das Messrohr abhängt, und anhand des Potentials einen Durchflussmesswert zu ermitteln.

**Claims**

1. Measuring arrangement (100), comprising

a metal measuring tube (110), open at both ends and designed to conduct a medium, wherein said measuring tube (110) has an outer lateral surface, an inner lateral surface and at least two openings,
wherein the two openings extend from the outer lateral surface to the inner lateral surface;
a dielectric lining layer (120), which is in contact with the inner lateral surface of the measuring tube (110);
a first microwave antenna (130), which is arranged in the measuring tube (110) and is contacted via the first opening;
a second microwave antenna (130), which is arranged in the measuring tube and is contacted via the second opening;
wherein the dielectric lining layer (120) forms a dielectric waveguide via which microwaves can at least partially pass from the first microwave antenna (130) to the second microwave antenna (130), **characterized in that**
the measuring arrangement (100) further consists of a first conductive ring structure and a second conductive ring structure, wherein said structures are each arranged on a front face of the metal measuring tube and delimit the dielectric lining layer on the front face.

2. Measuring arrangement as claimed in Claim 1,

wherein the first microwave antenna is covered by the lining layer and/or;

wherein the second microwave antenna is covered by the lining layer.

3. Measuring arrangement as claimed in Claim 1 or 2,

wherein the measuring tube is essentially cylindrical;
wherein the lining layer has a thickness b that is not more than 10 mm, particularly not more than 8 mm and preferably not more than 7 mm, and/or wherein the thickness amounts to a fifth, particularly not more than a sixth, of the inner diameter of the measuring tube.

4. Measuring arrangement as claimed in one of the previous claims,
wherein the lining layer has a thickness d which is not less than 2 mm, particularly not less than 4 mm and preferably not less than 5 mm.

5. Measuring arrangement as claimed in one of the previous claims,
wherein the measuring tube comprises a measuring tube axis, a straight connecting line extends between the first microwave antenna and the second microwave antenna, said line intersecting the measuring tube axis at a right angle.

6. Measuring arrangement as claimed in one of the previous claims,
wherein at least one of the microwave antennas comprises a planar antenna, wherein particularly both microwave antennas comprise a planar antenna.

7. Measuring arrangement as claimed in Claim 6,
wherein at least one of the planar antennas is spiral-shaped, wherein particularly both planar antennas are spiral-shaped.

8. Measuring arrangement as claimed in Claim 6 or 7,
wherein at least one of the planar antennas has a pressure-bearing ceramic plate as the support body, wherein particularly both planar antennas have a pressure-bearing ceramic plate as the support body.

9. Measuring arrangement as claimed in one of the previous claims,
further comprising a magnet assembly designed to generate a magnetic field, wherein said magnetic field penetrates the measuring tube essentially in a manner perpendicular to the measuring tube axis.

10. Measuring arrangement as claimed in Claim 9,
further comprising a first electrode and a second electrode, wherein said electrodes extend through the lining layer and into the measuring tube, wherein the electrodes are designed to be in electrical contact with a medium conducted in the measuring tube, wherein in particular a straight connecting line extends between the two electrodes, essentially in a manner perpendicular to the magnetic field and perpendicular to the measuring tube axis.

11. Measuring arrangement as claimed in Claim 9, wherein the first microwave antenna comprises the first electrode, and the second microwave antenna comprises the second electrode.

12. Measuring arrangement as claimed in one of the previous claims,
further comprising:
an operation and evaluation electronics unit, which has a high-frequency generator designed to supply at least one of the microwave antennas with at least a high-frequency signal, and which is designed to use the microwave signals received from the other antenna to determine at least one property, selected from the permittivity and loss factor, of a medium conducted in the measuring tube.

13. Measuring arrangement as claimed in Claim 12, wherein the high-frequency generator is designed to supply at least one of the microwave antennas with a sequence of high-frequency signals of different frequencies.

14. Measuring arrangement as claimed in Claim 12 or 13,
wherein the operation and evaluation electronics unit is designed to determine the at least one property of the medium conducted in the measuring tube on the basis of the attenuation of the high-frequency signals and/or the phase position between the high-frequency signals emitted and received.

15. Measuring arrangement as claimed in one of the Claims 10 to 14,

wherein the magnet assembly comprises at least a field coil, wherein the operation and evaluation electronics unit is designed to feed the at least one field coil,
to measure a potential between the first electrode and the second electrode, wherein said potential depends on the flow velocity of the medium through the measuring tube, and to determine a flow measured value on the basis of the potential.

**Revendications**

1. Dispositif de mesure (100), comprenant

un tube de mesure (110) métallique, ouvert des deux côtés, destiné au guidage d'un produit, lequel tube de mesure (110) présente une surface d'enveloppe extérieure, une surface d'enveloppe intérieure et au moins deux ouvertures,
les deux ouvertures s'étendant de la surface d'enveloppe extérieure à la surface d'enveloppe intérieure ;
une couche de revêtement diélectrique (120), laquelle est en contact avec la surface d'enveloppe intérieure du tube de mesure (110) ;
une première antenne hyperfréquence (130), laquelle est disposée dans le tube de mesure (110) et est en contact avec la première ouverture ;
une deuxième antenne hyperfréquence (130), laquelle est disposée dans le tube de mesure et est en contact avec la deuxième ouverture ;
la couche de revêtement diélectrique (120) formant un guide d'ondes diélectrique à travers lequel les micro-ondes peuvent passer au moins partiellement de la première antenne hyperfréquence (130) à la deuxième antenne hyperfréquence (130), **caractérisé en ce que**
le dispositif de mesure (100) présente en outre une première structure annulaire conductrice et une deuxième structure annulaire conductrice, lesquelles structures sont chacune disposées sur une face frontale du tube de mesure métallique et délimitent la couche de revêtement diélectrique sur la face frontale.

2. Dispositif de mesure selon la revendication 1,

pour lequel la première antenne hyperfréquence est recouverte par la couche de revêtement et/ou ;
pour lequel la deuxième antenne hyperfréquence est recouverte par la couche de revêtement.

3. Dispositif de mesure selon la revendication 1 ou 2,

pour lequel le tube de mesure est pour l'essentiel cylindrique ;
pour lequel la couche de revêtement présente une épaisseur b qui n'est pas supérieure à 10 mm, notamment pas supérieure à 8 mm et de préférence pas supérieure à 7 mm,
et/ou l'épaisseur étant égale à un cinquième, notamment au maximum égale à un sixième, du diamètre intérieur du tube de mesure.

4. Dispositif de mesure selon l'une des revendications précédentes,
pour lequel la couche de revêtement présente une épaisseur d qui n'est pas inférieure à 2 mm, notamment pas inférieure à 4 mm et de préférence pas inférieure à 5 mm.

**5.** Dispositif de mesure selon l'une des revendications précédentes, pour lequel le tube de mesure comprend un axe de tube de mesure, une ligne de liaison droite existant entre la première antenne hyperfréquence et la deuxième antenne hyperfréquence, laquelle ligne coupe l'axe de tube de mesure à angle droit.

**6.** Dispositif de mesure selon l'une des revendications précédentes, pour lequel au moins l'une des antennes hyperfréquences comprend une antenne planar, notamment les deux antennes hyperfréquences comprenant une antenne planar.

**7.** Dispositif de mesure selon la revendication 6, pour lequel au moins l'une des antennes planar est réalisée en forme de spirale, notamment les deux antennes planer étant réalisées en forme de spirale.

**8.** Dispositif de mesure selon la revendication 6 ou 7, pour lequel au moins l'une des antennes planar comporte en tant que corps de support une plaque céramique supportant la pression, notamment les deux antennes planar comportant en tant que corps de support une plaque céramique supportant la pression.

**9.** Dispositif de mesure selon l'une des revendications précédentes, comprenant en outre un module magnétique destiné à générer un champ magnétique, lequel champ magnétique pénètre dans le tube de mesure pour l'essentiel perpendiculairement à l'axe du tube de mesure.

**10.** Dispositif de mesure selon la revendication 9, comprenant en outre une première électrode et une deuxième électrode, lesquelles électrodes s'étendent à travers la couche de revêtement dans le tube de mesure, les électrodes étant conçues pour entrer en contact électrique avec un produit guidé dans le tube de mesure, une ligne de liaison droite entre les deux électrodes étant notamment pour l'essentiel perpendiculaire au champ magnétique et perpendiculaire à l'axe du tube de mesure.

**11.** Dispositif de mesure selon la revendication 9, pour lequel la première antenne hyperfréquence comprend la première électrode, et la deuxième antenne hyperfréquence comprend la deuxième électrode.

**12.** Dispositif de mesure selon l'une des revendications précédentes, comprenant en outre : une électronique d'exploitation et d'évaluation, laquelle électronique comprend un générateur de haute fréquence destiné à alimenter au moins l'une des antennes hyperfréquences avec au moins un signal de haute fréquence, et laquelle électronique est conçue pour déterminer, à l'aide des signaux hyperfréquences reçus par l'autre antenne, au moins une propriété choisie parmi la permittivité et le facteur de perte d'un produit guidé dans le tube de mesure.

**13.** Dispositif de mesure selon la revendication 12, pour lequel le générateur de haute fréquence est conçu pour alimenter l'au moins une des antennes hyperfréquences avec une séquence de signaux de haute fréquence de différentes fréquences.

**14.** Dispositif de mesure selon la revendication 12 ou 13, pour lequel l'électronique d'exploitation et d'évaluation est conçue pour déterminer l'au moins une propriété du produit guidé dans le tube de mesure à l'aide de l'atténuation des signaux de haute fréquence et/ou de la relation de phase entre les signaux de haute fréquence émis et reçus.

**15.** Dispositif de mesure selon l'une des revendications 10 à 14,

pour lequel le module magnétique comprend au moins une bobine de champ, pour lequel l'électronique d'exploitation et d'évaluation est conçue pour alimenter l'au moins une bobine de champ, mesurer un potentiel entre la première électrode et la deuxième électrode, lequel potentiel dépend de la vitesse d'écoulement d'un produit à travers le tube de mesure, et pour déterminer une valeur mesurée de débit à l'aide du potentiel.

**Fig. 1a**

**Fig. 1b**

**Fig. 1c**

**Fig. 1d**

**Fig. 1e**

EP 3 563 121 B1

Fig. 2b

Fig. 2a

Fig. 2d

Fig. 2c

Fig. 3b

Fig. 3c

Fig. 3a

Fig. 5a

Fig. 5b

Fig. 4a

Fig. 4b

**Fig. 6**

EP 3 563 121 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004057087 B3

- US 4755743 A

**In der Beschreibung aufgeführte Nicht-Patentliteratur**

- **L.F. CHEN ; C.K. ONG ; C.P. NEO ; V.V. VARADAN ; V. K. VARADAN.** Microwave Electronics, Measurement and Materials Characterization. John Wiley & Sons, 2004